Europäisches Patentamt

European Patent Office

Office européen des brevets

(19)

(11) Numéro de publication: **0 095 006**
**A1**

## (12) DEMANDE DE BREVET EUROPEEN

(21) Numéro de dépôt: 82400962.5

(22) Date de dépôt: 25.05.82

(51) Int. Cl.³: **B 23 B 49/04**
**B 23 B 5/16, B 23 B 3/06**

(43) Date de publication de la demande:
30.11.83 Bulletin 83/48

(84) Etats contractants désignés:
BE DE GB IT

(71) Demandeur: LORMAC-AUTOMATION
1, rue Clémenceau
F-54640 Tucquegnieux(FR)

(72) Inventeur: Schulligen, Denis
Impasse des Millefeuilles
F-57100 Thionville-Elange(FR)

(72) Inventeur: Romano, Joseph
Lotissement des Cens
F-55400 Etain(FR)

(74) Mandataire: Chevallier, Robert
Cabinet BOETTCHER 23, rue La Boétie
F-75008 Paris(FR)

(54) Tour à percer les centres et chanfreiner les bouts des pièces à tourner.

(57) Tour à percer les centres et chanfreiner les bouts des pièces à tourner.

Sur un banc longitudinal (3) sont montées une poupée fixe (4) et une poupée mobile (5) comprenant chacune une broche creuse et un mandrin dont l'entraînement en rotation se fait grâce à des poulies (17A, 17B) disposées sur les faces intérieures de ces poupées (4, 5) tandis que des moyens de guidage (20, 21) de chariots porte-outil sont prévus sur les côtés extérieurs, de sorte qu'une pièce (P) peut être usinée simultanément à ses deux extrémités opposées.

EP 0 095 006 A1

./...

*Fig:1*

Tour à percer les centres et chanfreiner les bouts des pièces à tourner.

L'invention a pour objet un tour destiné au perçage des trous de centrage et au chanfreinage des extrémités des pièces que l'on prépare en vue de leur usinage entre pointes sur un tour.

On connaît déjà dans le commerce des dispositifs qui sont conçus pour faciliter la préparation des extrémités des pièces à tourner. Ces dispositifs comprennent un moyen de centrage, fixe, dans laquelle la pièce à préparer est serrée; une tête d'usinage est montée en face de ce mandrin, avec une possibilité de déplacement. Cette tête comprend un mandrin tournant dans lequel on peut serrer l'outil qui convient pour exécuter à une extrémité de la pièce l'opération désirée : perçage d'un centre ou chanfreinage de l'extrémité. On ne peut traiter qu'une extrémité à la fois. Quand un perçage et/ou un chanfreinage a été fait à un bout, on retire la pièce du moyen de serrage, on la retourne et on la remet en place par son autre bout. Cette nécessité du retournement de la pièce est un premier inconvénient des dispositifs connus.

Comme la pièce à préparer est serrée dans le moyen de serrage qui est fixe, elle est elle-même immobile et ce sont les outils que l'on monte sur le mandrin tournant qui sont entraînés en rotation. Les forets à percer les centres sont les mêmes pour toutes les pièces mais les outils pour chanfreiner sont nécessairement adaptés aux divers diamètres des pièces autour desquelles ils doivent tourner pour usiner en tronc de cône les extrémités de ces pièces. Or, ces outils, de type spécial, sont coûteux ; en outre, on ne possède pas toujours à l'avance les outils dont on risque d'avoir besoin un jour. C'est un second inconvénient plus grave que le premier, des dispositifs connus.

L'invention a pour but principal d'éliminer ces deux inconvénients, en apportant un tour de conception nouvelle capable de percer et/ou chanfreiner simultanément les deux extrémités d'une pièce, et de réaliser les opérations de chanfreinage à l'aide des outils usuels d'usinage utilisés sur les tours classiques.

Sur un tour comprenant un banc longitudinal sur lequel sont montées une poupée fixe, supportant et guidant une première broche creuse, entrainée en rotation, et une poupée mobile, selon l'invention, la poupée mobile est équipée d'une seconde broche creuse disposée coaxialement à la première broche. Ces deux broches sont pourvues chacune d'un mandrin de serrage et le banc longitudinal supporte deux chariots porte-outil associés chacun respectivement à une poupée, à l'extérieur de l'espace s'étendant entre les deux poupées.

De préférence, une barre d'entraînement en rotation est supportée le long du banc longitudinal et les deux broches sont entrainées en rotation directement l'une et l'autre à partir de cette barre.

De préférence encore, la poupée mobile est déplaçable le long du banc par rapport à la poupée fixe grâce à une vis supportée par le banc et coopérant avec un écrou fixé à la poupée mobile ; l'entraînement en rotation de la seconde broche se fait par l'intermédiaire d'une poulie calée en rotation et montée coulissante sur la barre d'entraînement en rotation.

On donnera maintenant, uniquement à titre d'exemple, une description d'un tour réalisé conformément à l'invention. On se reportera aux dessins annexés dans lesquels :

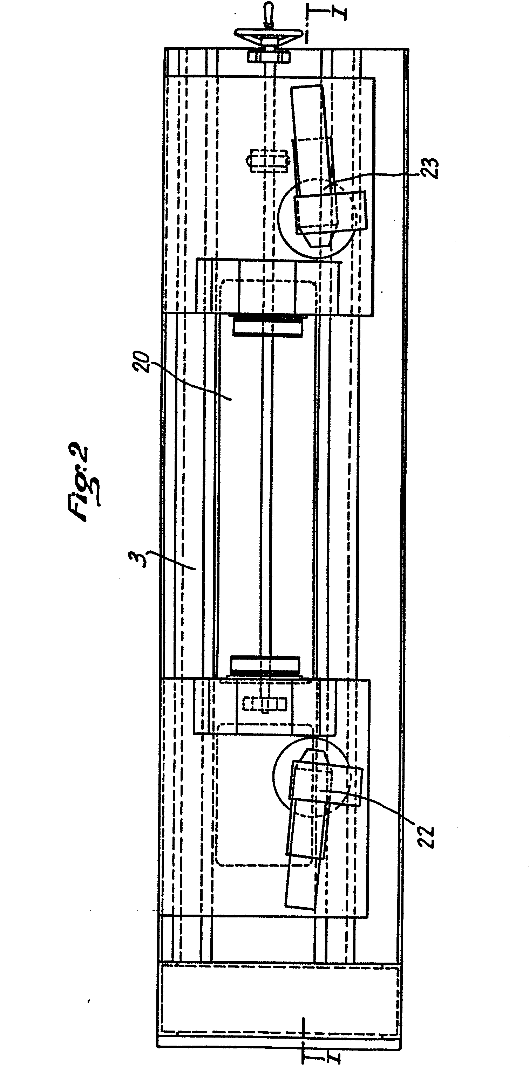

- la figure 1 est une vue en élévation, en coupe selon I-I de la figure 2, d'un tour selon l'invention,

- la figure 2 est une vue de dessus du tour de la figure 1, ,

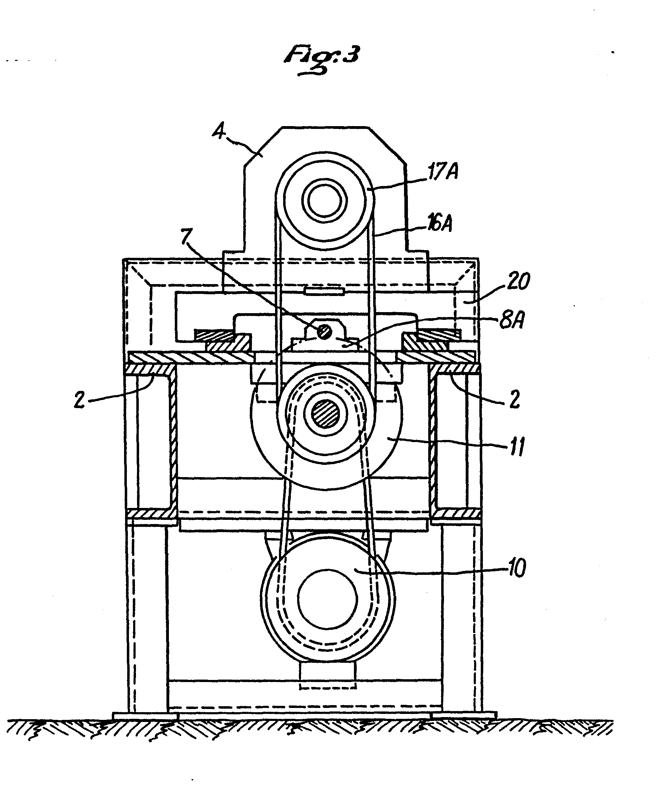

- la figure 3 est une vue de côté en coupe selon III-III de la figure 1.

Le tour de l'invention comprend des organes connus qu'il n'est pas nécessaire de décrire en détail; on se limitera dans ce qui suit à expliquer comment sont constituées les parties nouvelles de ce tour.

Un bâti 1, réalisé par exemple à partir de profilés 2 en U assemblés solidement, ayant ainsi la rigidité nécessaire, supporte un banc longitudinal 3 sur lequel est montée une poupée fixe 4. Celle-ci est équipée d'une broche creuse et d'un mandrin ; ces deux organes ne sont pas visibles sur les figures.

Le banc 3 supporte aussi une poupée mobile 5 mais, contrairement à ce qui est habituel, cette poupée mobile 5 est équipée aussi d'une broche creuse et d'un mandrin. Les deux broches et les deux mandrins sont disposés en alignement, coaxialement. Il est avantageux que les deux poupées 4 et 5 soient substantiellement identiques ; elles sont montées, symétriquement l'une à l'autre sur le banc 3. La différence importante entre elles est que la poupée 5/est monté pour être déplacée sur le banc 3, de préférence grâce à un écrou 6 qui lui est fixé et dans lequel est engagée une vis 7. Cette dernière est supportée longitudinalement par des paliers 8A, 8B portés par le banc 3. A son extrémité opposée à la poupée 4, la vis 7 est pourvue d'un volant de manoeuvre. Ce moyen de déplacement de la poupée mobile 5 est connu en soi et pourrait être remplacé par tout moyen approprié équivalent permettant de rapprocher et d'éloigner la poupée mobile 5 de la poupée fixe 4.

A l'extrémité du bâti 1 où se trouve la poupée fixe 4, est monté un moteur 10 qui est accouplé par l'intermédiaire d'un variateur de vitesse 11 à une barre 12 d'entraînement en rotation. Cette barre 12 est supportée en dessous du banc 3 dans des paliers 13, 14 ; il est préférable qu'elle s'étende sur toute la distance maximum qui peut séparer les poupées 4, 5. En regard de la poupée fixe 4, la barre d'entraînement en rotation 12 porte une poulie 15A qui est réunie par une courroie 16A à une poulie 17A. Cette dernière est accouplée en rotation par des moyens non représentés à la broche guidée dans la poupée fixe 4. Mais contrairement à ce qui est habituel, la poulie 17 est située sur le côté de la poupée 4 qui est tournée vers la poupée mobile 5.

Pour obtenir un meilleur fonctionnement du tour de l'invention, il est préférable, bien que non obligatoire, de prévoir, symétriquement, une poulie 17B qui est accouplée en rotation à la broche guidée dans la poupée mobile 5. Une cour-

4    0095006

roie 16B relie cette poulie 17B à une poulie 15B montée sur la barre d'entraînement en rotation 12. La poulie 15B est calée en rotation et déplaçable en translation sur la barre 12. De préférence une lunette à suivre 18 est fixée par une équerre 19 en-dessous de la poupée mobile 5 pour contenir et guider la barre 12. La courroie 16B et l'équerre 19 peuvent accompagner la poupée mobile 5 grâce à un évidement central longitudinal 20 ménagé dans le banc 3.

A chacune des poupées 4, 5 est associé respectivement ce que l'on appelle ici un trainard 20, 21, bien que le trainard 20 soit réuni à la poupée 4 et qu'il soit fixe comme celle-ci par rapport au banc 3. Le trainard 21 est réuni à la poupée 5 et il est mobile avec elle. Plus exactement, l'écrou 6 est attaché à la face inférieure du trainard 21 et c'est par l'intermédiaire de ce dernier que la poupée 6 est déplacée sur le banc 3. En outre, contrairement à ce qui est habituel, les trainards 20, 21 se trouvent tous les deux à l'extérieur de l'intervalle qui sépare les poupées 4, 5. Chaque trainard 20, 21 porte un chariot porte-outil 22, 23, de type connu en soi, qui est déplaçable en sens transversal et en sens longitudinal grâce à des glissières convenables (non représentées). De plus, chaque porte-outil 22, 23, comprend une partie orientable ainsi qu'il est connu. Les porte-outil de ce genre sont disponibles dans le commerce ; il n'est pas nécessaire de les décrire davantage. On notera que les porte-outil 22, 23 pourraient être supportés directement par le banc longitudinal 3.

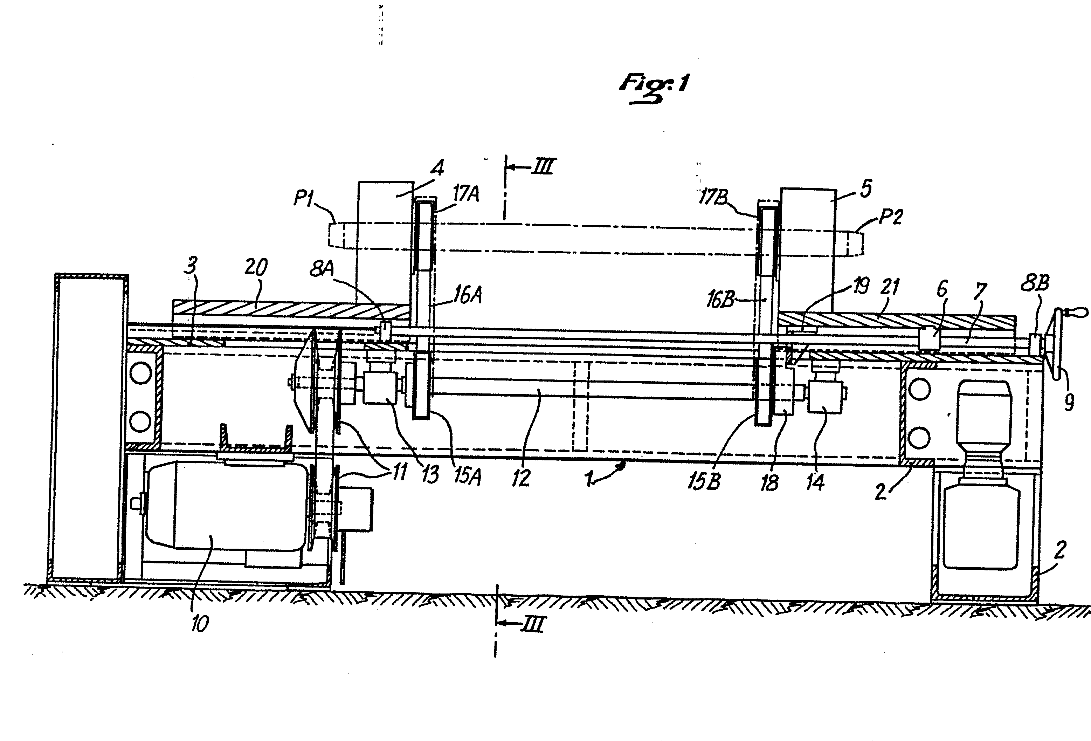

Après avoir déplacé la poupée mobile 5 pour la mettre à la distance désirable de la poupée fixe 4, on peut monter dans les broches et les mandrins de ces deux poupées, à la fois, une pièce P, dessinée en trait mixte sur la figure 1, en laissant dépasser ses parties extrêmes $P_1$ et $P_2$ à l'extérieur des poupées 4 et 5, respectivement, du côté des chariots porte-outil 22 et 23 (non représentés sur la figure 1). La pièce P étant entraînée en rotation par l'intermédiaire des deux courroies 16A, 16B, on peut percer les centres et usiner les parties extrêmes $P_1$, $P_2$ quelqu'en soit le diamètre, avec des outils courants.

Les poupées 4, 5 n'ont pas été décrites en détail ; il ne paraît pas nécessaire qu'elles le soient. En effet, on connait depuis longtemps sur les tours des broches creuses à travers lesquelles on peut faire passer des pièces à usiner, sur les tours à décolleter, par exemple. On connait aussi depuis longtemps des mandrins de serrage que l'on peut faire traverser par des pièces à serrer. De plus, sur les tours à décolleter les broches sont associées à des pinces de serrage qui assurent l'entraînement en rotation des barres à usiner. Par conséquent, on peut adopter des moyens connus pour réaliser les poupées 4,5. Toutefois, on reconnaîtra qu'il est utile de se servir de poupées 4, 5 ayant une dimension aussi réduite que possible dans le sens longitudinal du banc 3. Plus cette dimension est faible, plus les pièces P que l'on désire usiner sur le tour de l'invention peuvent être de courte longueur. On utilisera donc, avantageusement des poupées d'un type nouveau tel que celui qui est décrit dans la demande de brevet français au nom de la déposante ayant pour titre : "Dispositif à broche creuse et à mandrin combinés".

# REVENDICATIONS

1. Tour pour percer les centres comprenant un banc longitudinal (3) sur lequel sont montées une poupée fixe (4) supportant et guidant en rotation une première broche creuse et une poupée mobile (5), caractérisé en ce que la poupée mobile (5) est équipée d'une seconde broche creuse disposée coaxialement à la première broche creuse, les deux broches sont pourvues chacune d'un mandrin de serrage et le banc longitudinal (3) supporte deux chariots porte-outil (22, 23) associés chacun respectivement à une poupée (4,5) à l'extérieur de l'espace séparant les deux poupées (4,5).

2. Tour selon la revendication 1, comprenant une barre (12) d'entraînement en rotation supportée le long du banc longitudinal (3), caractérisé en ce que le mandrin de l'une au moins des poupées (4,5) est accouplé à une poulie (17A) et celle-ci est réunie par une courroie (16A) à une poulie (15A) calée en rotation sur la barre (22).

3. Tour selon la revendication 2, caractérisé en ce que les mandrins des deux poupées (4,5) sont accouplés chacun à une poulie (17A, 17B) et celle-ci est réunie par une courroie (16A, 16B) à une poulie correspondante (15A, 15B) calée en rotation sur la barre (22), la poulie (15B) qui est en relation avec la poupée mobile (5) étant montée déplaçable en translation sur la barre (22).

4. Tour selon la revendication 3, caractérisé en ce que les poulies (17A, 17B) accouplées respectivement aux mandrins sont placées chacune du côté de la poupée (4ou5) qui est tourné vers l'autre poupée (5 ou 4).

5. Tour selon la revendication 1, caractérisé en ce que chaque poupée (4, 5) est pourvue sur son côté opposé à l'autre poupée d'un trainard (20, 21) sur lequel est monté et guidé en sens transversal et en sens longitudinal un chariot porte-outil (22, 23).

6. Tour selon la revendication 1, caractérisé en ce que la poupée mobile (5) est munie d'un écrou (6) dans lequel est engagée une vis (7) s'étendant longitudinalement

**0095006**

supportée par des paliers (8A, 8B) montés sur le banc longitudinal (3).

7. Tour selon les revendications 5, 6 réunies, caractérisé en ce que l'écrou (6) est fixé à la face inférieure du trainard (21) associé à la poupée mobile (5).

8. Tour selon la revendication 2, caractérisé en ce que la poupée mobile (5) est pourvue à sa face inférieure par l'intermédiaire d'une équerre (19) d'une lunette à suivre (18) dans laquelle est guidée la barre d'entrainement (22).

Fig.1

1/3

Fig:2

0095006

Fig.3

Office européen
des brevets

RAPPORT DE RECHERCHE EUROPEENNE

0095006
Numéro de la demande

EP 82 40 0962

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 23 B 49/04 |
| A | CH-A- 347 696 (TECHNICUM NEUCHATELOIS) | 1-5 | B 23 B 5/16 |
| | | | B 23 B 3/06 |
| | --- | | |
| A | BE-A- 657 841 (COLLINS) | | |
| | --- | | |
| A | DE-A-1 477 479 (KEHR & WICHMANN) | | |
| | --- | | |
| A | DE-C- 939 788 (AUTO-HEINEN) | | |
| | --- | | |
| A | DE-C- 46 649 (PATRICK) | | |
| | ----- | | |

**DOMAINES TECHNIQUES RECHERCHES (Int. Cl. ³)**

B 23 B

Le présent rapport de recherche a été établi pour toutes les revendications

| Lieu de la recherche | Date d'achèvement de la recherche | Examinateur |
|---|---|---|
| LA HAYE | 14-01-1983 | BOGAERT F.L. |